# EUROPÄISCHE PATENTSCHRIFT

(11) **EP 0 824 856 B1**
(45) Veröffentlichungstag und Bekanntmachung des Hinweises auf die Patenterteilung: **02.01.2002**
(21) Anmeldenummer: 97113289.9
(22) Anmeldetag: 01.08.1997
(51) Int. Cl.: A01D 45/02

(54) **Maschine zum reihenunabhängigen Mähen und Häckseln von Mais und dgl. stengelartigem Erntegut**
Machine for mowing and chopping maize and suchlike stalk crops
Machine pour faucher et hacher de mais et des plantes à tiges similaires

(30) Priorität: 22.08.1996 DE 29614549 U
(43) Veröffentlichungstag der Anmeldung: 25.02.1998
(73) Patentinhaber: Maschinenfabrik Kemper GmbH & Co. KG, 48703 Stadtlohn (DE)
(72) Erfinder: Sievers-Over Behrens, Matthias, 48653 Coesfeld (DE); Wübbels, Richard, 46414 Rhede (DE); Schulze Hockenbeck, Leo, 48351 Everswinkel (DE)
(74) Vertreter: Holst, Sönke, Dr.

(56) Entgegenhaltungen:
- EP-A- 0 508 189
- EP-A- 0 760 200
- DE-A- 3 909 754
- GB-A- 2 012 153

## Beschreibung

Die Erfindung betrifft eine Maschine zum reihenunabhängigen Mähen und Häckseln von Mais und dgl. stengelartigem Erntegut nach dem Oberbegriff des Patentanspruchs 1.

Bei einer bekannten derartigen Maschine, die häufig auch kurz als Mais-Mäh-Häcksler bezeichnet wird, werden die Stengel des Erntegutes in aufrechter Stellung eingezogen und gemäht und anschließend dem Häcksler über die diesem vorgeschalteten Einschubwalzen zugeführt. Eine derartige Maschine wird z.B. in DE 3909754 offenbart. Durch eine Mehrzahl von über den vorderen Arbeitsbereich der Maschine verteilt ausgebildeten Einzugs- und Schnittstellen wird eine von Reihenabstand und Reihenrichtung des Erntegutes unabhängige Arbeitsweise der Einzugs- und Mähtrommeln erreicht, so daß die Maschine auch bei Breitsaat, vergleichbar einem Mähdrescher im Getreide, eingesetzt werden kann. Darüber hinaus kann mit Hilfe der an den Einzugs- und Mähtrommeln vorgesehenen Mitnehmerzähne auch geknicktes Erntegut, z.B. Lagermais, einwandfrei aufgenommen werden.

Der Erfindung liegt die Aufgabe zugrunde, eine Maschine der eingangs angegebenen Art zu schaffen, die den unterschiedlichen Erntebedingungen von Mais einerseits und anderem, einer Ganzpflanzensilage zuzuführendem Erntegut wie verschiedenen Getreidearten und Gräsern angepaßt werden kann.

Ausgehend von einer Maschine der eingangs angegebenen Art wird diese Aufgabe nach der Erfindung durch die im kennzeichnenden Teil des Patentanspruchs 1 angegebenen Merkmale gelöst. Weitere Merkmale und vorteilhafte Einzelheiten der Erfindung ergeben sich aus den Unteransprüchen.

Bei der erfindungsgemäßen Ausgestaltung einer Maschine zum reihenunabhängigen Mähen und Häckseln von Mais und anderem Ganzpflanzensilagegut ist mittels der Einwölbung im Außenrand der jeweiligen Abdeckplatte eine die Mitnehmerzähne der Einzugs- und Mähtrommel in diesem Bereich freilegende Öffnung geschaffen, die es speziell anderem Erntegut als Mais, d.h. Getreidearten und Gräsern, ermöglicht, durch diese Öffnung zwischen die Mitnehmerzähne der Einzugs- und Mähtrommel einzudringen. Dies erweist sich als vorteilhaft bei den für eine Ganzpflanzensilage vorgesehenen Getreidearten und Gräsern, weil diese für die Silage im grünen, unreifen Zustand geschnitten werden, wobei eine erhebliche Grünmasse geschnitten und von den Mitnehmerzähnen zum Häcksler hin weitergefördert werden muß. Die erfindungsgemäße Ausgestaltung vermeidet hierbei Störungen in dem anfälligen Bereich des, bezogen auf den Häcksler, rückläufigen Rotationssektors der Einzugs- und Mähtrommeln durch die nahe der angrenzenden Teilerspitze geschaffene Eintrittsöffnung für das Erntegut, die es ermöglicht, daß die vermehrte Grünmasse von den Mitnehmerzähnen der Einzugs- und Mähtrommeln voll erfaßt und durch die weiterdrehende Trommel sicher den Einschubwalzen des Häckslers zugeführt werden kann. Da sich diese Öffnung beim Mähen von Mais, der im Reifezustand geschnitten wird, als weniger günstig für den Förderungsablauf erweist, wird sie nach der Erfindung mittels eines Sperrgliedes beim Mähen von Mais geschlossen. Der Erntebetrieb kann auf diese Weise in Abhängigkeit von dem Erntegut optimiert werden.

Das Sperrglied kann in einfacher Weise in einer die Einwölbung übergreifenden Position mit der Abdeckplatte verbindbar sein. Insbesondere kommen für diese Verbindung Schraubverbindungen in Betracht, die sich leicht herstellen und im Bedarfsfall wieder leicht lösen lassen.

In weiterer Ausgestaltung der Erfindung kann das Sperrglied von einem auf die Abdeckplatte aufsetzbaren Ablenkkörper für kopflastiges Erntegut, speziell Mais, gebildet sein. Ein solcher Ablenkkörper verhindert ein Abbrechen und Abfallen des Maiskolbens von der Abdeckplatte, so daß Maiskolbenverluste während der Förderung der geschnittenen Maispflanzen zum Häcksler praktisch ausgeschlossen sind.

Der Ablenkkörper besitzt zweckmäßig eine stabförmige Grundgestalt und ist mit seiner Längsachse in Querausrichtung zur Fahrtrichtung auf der Oberseite der Abdeckplatte in deren vorderem Randbereich befestigbar. Der Ablenkkörper kann dabei jede geeignete Ausgestaltung, z.B. als Rundrohr oder Vierkantrohr, aufweisen, wobei sich jedoch als besonders vorteilhaft für den Erntebetrieb eine keilförmige Ausbildung mit in Fahrtrichtung geneigtem Keilrücken erwiesen hat.

In der nachstehenden Beschreibung ist die Erfindung mit weiteren Merkmalen und Vorteilen anhand einer Zeichnung näher erläutert, in der ein Ausführungsbeispiel des Gegenstands der Erfindung schematisch veranschaulicht ist; in der Zeichnung zeigt:
- Fig. 1: eine Draufsicht auf den in Fahrtrichtung vorderen Bereich der Maschine mit insgesamt acht Einzugs- und Mähtrommeln in einer ersten Betriebsart,
- Fig. 2: eine Darstellung entsprechend Fig. 1 zur Veranschaulichung einer zweiten Betriebsart der Maschine,
- Fig. 3: einen Ausschnitt der Fig. 2 in gegenüber dieser vergrößertem Maßstab,
- Fig. 4: einen Ausschnitt aus Fig. 3 in gegenüber dieser wiederum vergrößertem Maßstab,
- Fig. 5: einen Querschnitt durch eine Teilerspitze mit Blick auf eine angrenzende Einzugs- und Mähtrommel,
- Fig. 6: einen Längsschnitt durch eine Teilerspitze mit Blick auf eine angrenzende Einzugs- und Mähtrommel und
- Fig. 7: einen Querschnitt durch einen in der zweiten Betriebsart der Maschine Verwendung findenden keilförmigen Ablenkkörper.

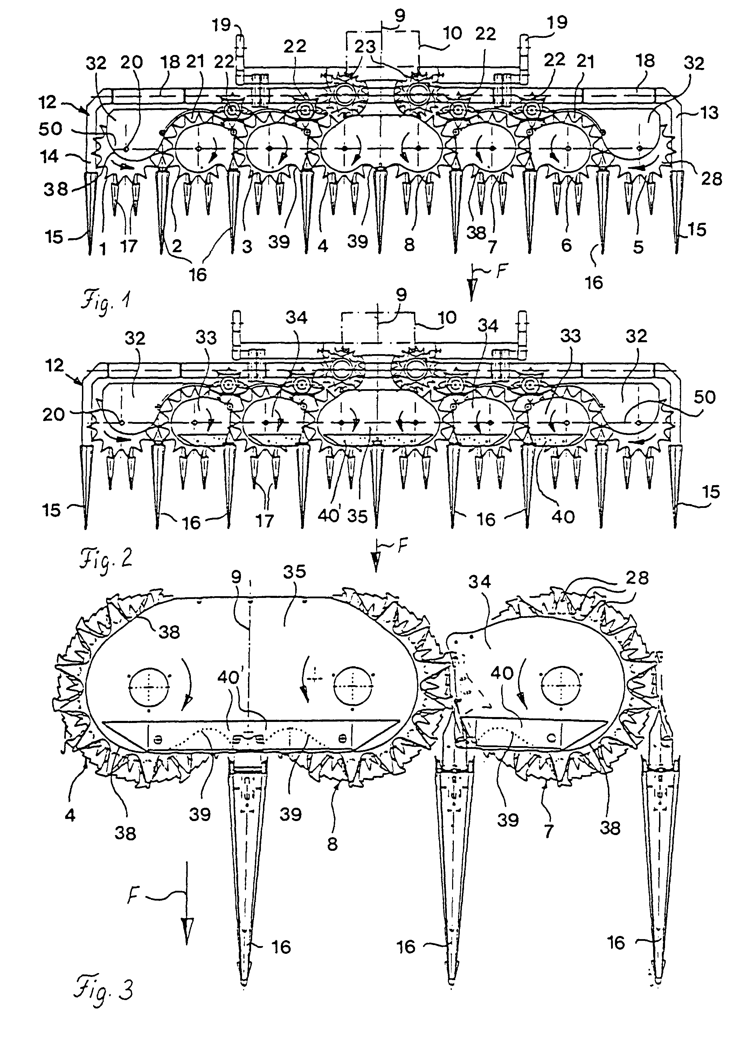

Die gemäß den Fig. 1 und 2 in Arbeits- bzw. Fahrtrichtung gemäß dem Pfeil F vorbewegte Maschine kann, wie bei dem dargestellten Ausführungsbeispiel, als Anbaugerät für einen Schlepper oder aber auch als Selbstfahrer ausgebildet sein und umfaßt bei dem dargestellten Beispiel insgesamt acht Einzugs- und Mähtrommeln 1 bis 8, von denen die Einzugs- und Mähtrommeln 1 bis 4 auf der einen und die Einzugs- und Mähtrommeln 5 bis 8 auf der anderen Seite einer vertikalen Längsmittelebene 9 angeordnet sind, die eine Symmetrieebene für die Maschine in dem dargestellten Umfang bildet. Die Einzugs- und Mähtrommeln 1 bis 8 sind in Fahrtrichtung F dem nur strichpunktiert angedeuteten Häcksler 10 vorgeordnet, dem seinerseits die üblichen Einschubwalzen vorgeordnet sind, die einen waagerechten Einführungsspalt für das geschnittene Erntegut definieren.

Die Einzugs- und Mähtrommeln 1 bis 8 sind von einem an der Vorderseite, in Fahrtrichtung F, offenen Maschinenrahmen 12 seitlich und rückseitig umgeben. Der Maschinenrahmen 12 umfaßt seitliche Führungen 13 und 14, die zusammen die Arbeitsbreite der Maschine bestimmen. Die seitlichen Führungen 13 und 14 laufen vorn jeweils in einer Teilerspitze 15 aus, die als Blattheber für das Erntegut wirken und den Mähschnitt vorbereiten. Innerhalb der Arbeitsbreite der Maschine sind im Bereich vor dem Zwickel zwischen jeweils zwei benachbarten Einzugs- und Mähtrommeln 1 bis 8 weitere Teilerspitzen 16 von der gleichen Länge wie die Teilerspitzen 15 angeordnet, und zwischen den Teilerspitzen 15, 16 befinden sich je zwei voneinander beabstandete kurze Teilerspitzen 17. Die Teilerspitzen 16 und 17 sind in nicht näher dargestellter Weise unterseitig am Maschinenrahmen 12 befestigt.

An der Rückseite des Maschinenrahmens 12 ist beidseits der vertikalen Längsmittelebene 9 je ein Rahmenrohr 18 festgelegt, das jeweils einen Hauptantriebsstrang für die Einzugs- und Mähtrommeln 1 bis 4 bzw. 5 bis 8 enthält. Der Antrieb wird jeweils über ein Stirnradgetriebe 19 vom Zentralgetriebe des Häckslers 10 abgenommen und auf den jeweiligen Hauptantriebsstrang im Rahmenrohr 18 gegeben. Vom Hauptantriebsstrang aus werden über Winkelgetriebe die einzelnen Einzugs- und Mähtrommeln 1 bis 8 für ihren Umlauf mit gleicher Umlaufgeschwindigkeit um eine vertikale oder zumindest im wesentlichen vertikalen Drehachse 20 angetrieben. Zwischen den jeweils benachbarten Teilerspitzen 15, 16, 17 ist jeweils eine Einzugs- und Schnittstelle für die zu erntenden Gutstengel ausgebildet, die sodann von den Einzugs- und Mähtrommeln 1 bis 8, deren Drehrichtung jeweils durch einen Bewegungspfeil kenntlich gemacht ist, durch je einen Förderkanal 21 beidseits der vertikalen Längsmittelebene 9 dem Häcksler 10 zugefördert werden.

Im Zwickelbereich zwischen den Einzugs- und Mähtrommeln 2, 3 und 3, 4 sowie 6, 7 und 7, 8 ist je eine Querfördertrommel 22 für das geschnittene Erntegut angeordnet, die wie die Einzugs- und Mähtrommeln 5 bis 8, mit abstehenden Mitnehmerzähnen versehen sind und ihrerseits um eine im wesentlichen vertikalen Achse umlaufen. Zur Überbrückung eines vertikalen Abstands zwischen der im wesentlichen horizontalen Mähebene und der von den Einschubwalzen des Häckslers 10 definierten Horizontalebene ist bei dem dargestellten Beispiel im Bereich zwischen der der vertikalen Längsmittelebene 9 nächstgelegenen Querfördertrommel 22 und den Einschubwalzen des Häckslers 10 jeweils eine Schrägfördertrommel 23 angeordnet, die ihrerseits mit abstehenden Mitnehmerzähnen versehen sind. Die Schrägfördertrommeln 23 besitzen eine Anordnung und Ausgestaltung zur Übergabe des geschnittenen Erntegutes aus dem jeweils an die Längsmittelebene 9 angrenzenden Auslaufende der Förderkanäle 21 und zur Einspeisung des Erntegutes in den Einführungsspalt zwischen den Einschubwalzen des Häckslers 10.

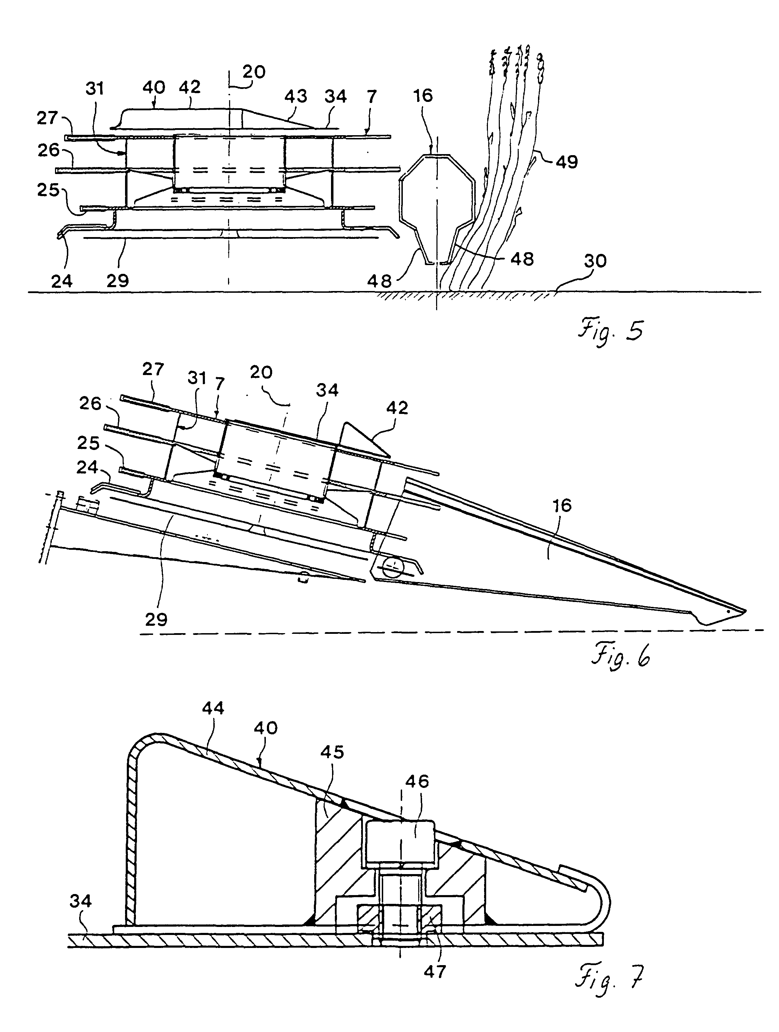

Die Fig. 5 und 6 zeigen anhand der Einzugs- und Mähtrommel 7 die Ausbildung der untereinander gleich aufgebauten Einzugs- und Mähtrommeln 1 bis 8 mit vier im vertikalen Abstand übereinander angeordneten Kränzen 24 bis 27 von Mitnehmerzähnen 28, von denen die Mitnehmerzähne 28 der Zahnkränze 25 bis 27 die aus den Fig. 1 bis 4 ersichtliche dreieckige Grundform mit nach außen gerichteter Dreieckspitze aufweisen, während die Mitnehmerzähne 28' des unteren Zahnkranzes 24 eine nach unten abgewinkelte, z.B. trapezförmige Gestalt aufweisen können, wie sie für ein Zusammenwirken mit dem unmittelbar unter dem Zahnkranz 24 umlaufenden kreisförmigen Mähmesser 29 z.B. nach Art eines Sägerotors zweckmäßig ist. Das Mähmesser 29 läuft im Betrieb der Maschine mit wesentlich höherer Umfangsgeschwindigkeit als die Zahnkränze 24 bis 27 um, so daß die Gutstengel nach Art eines Rotormähers im freien Schnitt von den Mähmessern 29 kurz oberhalb des in Fig. 5 bei 30 angedeuteten Bodens abgetrennt werden. Die langsamer umlaufenden Zahnkränze 24 bis 27 sind an einem Trommelkörper 31 abgestützt, der den zylindrischen Umfang der Einzugs- und Mähtrommeln 1 bis 8 definiert und, ebenso wie das Mähmesser 29, in nicht näher dargestellter Weise seinen Antrieb von dem jeweiligen Hauptantriebsstrang im Rahmenrohr 18 ableitet. Der Trommelkörper 31 und das Mähmesser 29 rotieren um die gemeinsame Drehachse 20.

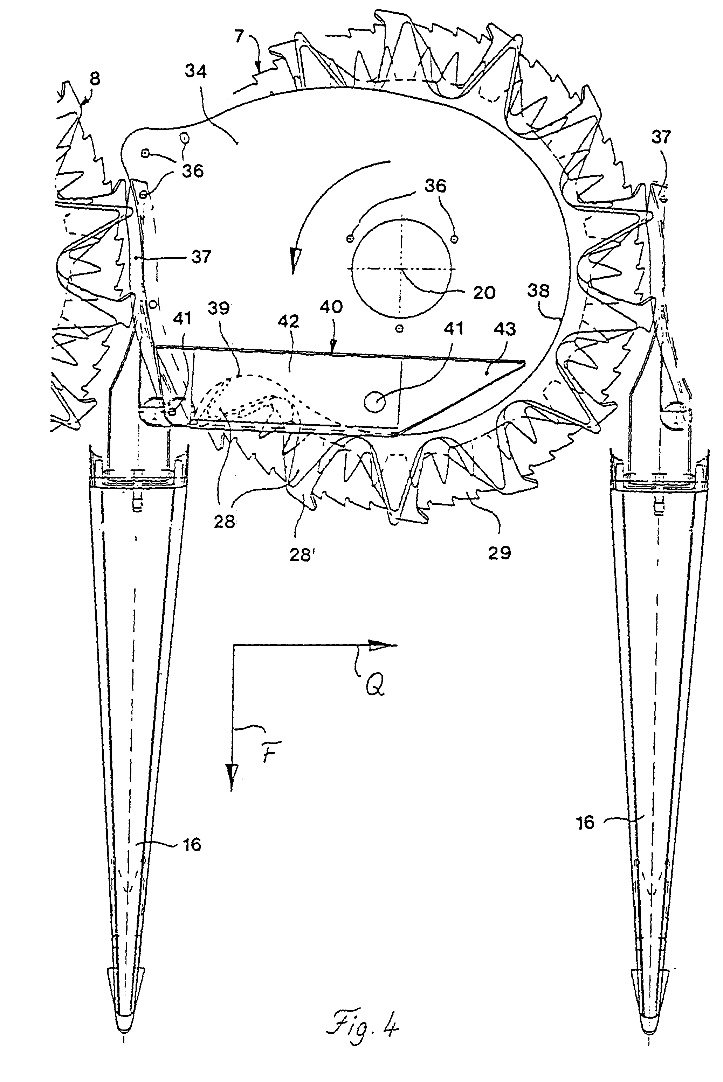

Oberseitig sind die Einzugs- und Mähtrommeln 1 bis 8 von maschinenfesten Abdeckplatten 32 bis 35 im Bereich ihres, bezogen auf den Häcksler 10, rückläufigen Rotationssektors übergriffen. Die Abdeckplatten 32 bis 35 sind, wie dies insbesondere Fig. 4 in Verbindung mit der Einzugs- und Mähtrommel 7 erkennen läßt, an mehreren Befestigungsstellen 36, die zweckmäßig Schraubverbindungen sind, ortsfest verbunden mit stationären Teilen des Trommelkörpers 31 und dem Maschinenrahmen 12 bzw. hierfür geeigneten Rahmenteilen beispielsweise in Form senkrechter Versteifungsglieder des Maschinenrahmens 12 bzw. Trennkörper 37, wie sie, in Fahrtrichtung F gesehen, vor jeder Querfördertrommel 22 im Spalt zwischen den beiden jeweils benachbarten Einzugs- und Mähtrommeln 2, 3 und 3, 4 bzw. 6, 7 und 7, 8 angeordnet sind. Die mittlere Abdeckplatte 35, die sich beidseits der vertikalen Längsmittelebene 9 der Maschine erstreckt, ist den beiden inneren Einzugs- und Mähtrommeln 4 und 8 gemeinsam zugeordnet und an beiden Trommelkörpern an ortsfesten Trommelteilen und geeigneten Teilen des Maschinenrahmens 12 in nicht näher dargestellter Weise befestigt.

Der Außenrand 38 der Abdeckplatten 33, 34 und 35 hat, in Fahrtrichtung F gesehen, im vorderen Bereich der Einzugs- und Mähtrommel 2, 3, 4 bzw. 6, 7, 8 vom Zahnfußkreis ihrer Mitnehmerzähne 28 einen großen Abstand, der sich zum hinteren Ende der Einzugs- und Mähtrommel 2, 3, 4 bzw. 6, 7, 8 auf die Höhe des Zahnfußkreises verkleinert und tangential zu diesem ausläuft. Hierdurch ist der Einlaufbereich der Einzugs- und Mähtrommeln 2, 3, 4 und 6, 7, 8, d.h. der, bezogen auf den Häcksler 10, vorauslaufende Rotationssektor, aggressiv ausgebildet und hat eine starke Förderwirkung auf das geschnittene Erntegut, während der hintere Bereich, zu Beginn des rücklaufenden Rotationssektors der Einzugs- und Mähtrommeln 2, 3, 4 und 6, 7, 8, abgedeckt ist, um einer unerwünschten Rückförderung von Teilen des Erntegutes entgegenzuwirken.

In einem Bereich, der an die jeweilige Teilerspitze 16 in der Maschinenmitte und gegenüber den Querfördertrommeln 22 angrenzt, weist der Außenrand 38 der Abdeckplatten 33, 34 und 35 eine Einwölbung 39 entgegen der Fahrtrichtung F auf. Die Einwölbung 39 bildet eine Öffnung, die die Mitnehmerzähne 28 der zugehörigen Einzugs- und Mähtrommel 2, 3, 4 und 6, 7, 8 freilegt, so daß hier im Mähbetrieb das Erntegut zwischen die Mitnehmerzähne 28 eintreten kann. Die Einwölbung 39 endet bogenförmig im Übergangsbereich zwischen der in Fahrtrichtung F, d.h. nach vorn, und der quer dazu in Richtung Q weisenden Bewegungskomponente der in der angegebenen Pfeilrichtung umlaufenden Einzugs- und Mähtrommel 2, 3, 4 und 6, 7, 8, wie dies insbesondere aus Fig. 4 ersichtlich ist. Die durch die Einwölbungen 39 gebildeten Öffnungen sind wirksam bei der Ernte von Ganzpflanzensilagegut in Form von Getreide und Gräsern. Diese Betriebsart ist in Fig. 1 dargestellt.

Wie aus Fig. 5 ersichtlich ist, weisen die Teilerspitzen 16 ein Querschnittsprofil mit zu ihrem unteren Ende hin verjüngten unteren Seitenteilen 48 auf. Diese Ausbildung trägt zur Verbesserung des Schnittbildes bei, da die Stengel 49 des Erntegutes hierbei, wie Fig. 5 zeigt, vor dem Schneidvorgang weniger aus ihrer senkrechten Position seitlich abgelenkt werden.

Zum Ernten von Mais und anderem kopflastigen Erntegut wird die die Mitnehmerzähne 28 freilegende Öffnung durch ein Sperrglied in Form eines Ablenkkörpers 40 geschlossen, der in einer die Einwölbung 39 übergreifenden Position mit der zugehörigen Abdeckplatte 33, 34, 35 fest verbunden wird. Diese Betriebsart zeigen die Fig. 2 bis 7.

Der Ablenkkörper 40 hat eine stabförmige Grundgestalt und wird für die Maiserntebetriebsart mit seiner Längsachse in Querausrichtung Q zur Fahrtrichtung F auf der Oberseite der zugehörigen Abdeckplatte 33, 34, 35 in deren vorderem Randbereich befestigt, wie dies insbesondere Fig. 4 veranschaulicht. Der Befestigung dienen Schraubverbindungen, die in Fig. 4 bei 41 schematisch veranschaulicht sind.

Der Ablenkkörper 40 ist keilförmig mit in Fahrtrichtung F geneigtem Keilrücken 42 ausgebildet, wobei der Keilrücken 42 einen ersten Keilbereich mit in Fahrtrichtung F weisender Keilspitze einnimmt, der sich mit seiner Keilbreite etwa von einer gedachten Verlängerungslinie der angrenzenden Seitenwand der benachbarten Teilerspitze 16 in Querrichtung Q bis zu einer die Drehachse 20 enthaltenden zur Fahrtrichtung F parallelen Vertikalebene erstreckt und dabei die Einwölbung 39 abdeckt. An das von der Einwölbung 39 abgewandte Ende des Keilbereichs 42 schließt sich ein zweiter Keilbereich 43 an, dessen Keilspitze in Richtung Q weist und der in Draufsicht Dreiecksform besitzt, wobei die freie Dreiecksspitze vor dem Außenrand 38 der zugehörigen Abdeckplatte 33, 34, 35 endet.

Der zugleich als Sperrglied wirkende Ablenkkörper, der bei den geschnittenen Maisstengeln auf ihrem Förderweg zum Häcksler 10 hin ein zu einem Kolbenverlust führendes Abrollen des Kolbens von der Abdeckplatte 33, 34, 35 verhindert, ist bei dem dargestellten Beispiel von einem mit der zugehörigen Abdeckplatte verschraubbaren Profilkörper, speziell in Form des in Fig. 7 veranschaulichten Hohlprofilkörpers 44, gebildet. Dieser Hohlprofilkörper 44 ist eine geschweißte Blechkonstruktion, in die für eine Verschraubung mit der zugehörigen Abdeckplatte 33, 34, 35 an den Befestigungsstellen 41 eine Hülse 45 eingeschweißt ist, die jeweils eine Schraube 46 aufnimmt, die mit ihrem Gewindeende in eine Gewindehülse 47, die ihrerseits mit der zugehörigen Abdeckplatte 33, 34, 35 verschweißt ist, eingeschraubt wird, um den jeweiligen Ablenkkörper 40 an seiner zugehörigen Abdeckplatte festzulegen.

Bei der mittleren Abdeckplatte 35 sind zwei Ablenkkörper 40 in spiegelsymmetrischer Anordnung zu einem einzigen Ablenkkörper 40' zusammengefaßt, der, wie Fig. 3 zeigt, die Einwölbungen 39 der Abdeckplatten 4 und 8 abdeckt.

Die Abdeckplatten 32 der beiden äußeren Einzugs- und Mähtrommeln 1 und 5 sind gegenüber den übrigen Abdeckplatten 33, 34 und 35 unterschiedlich ausgebildet. Sie weisen keine Einwölbung 39 und dementsprechend auch keinen Ablenkkörper 40 oder dgl. Sperrglied für diese auf. Dies folgt aus den unterschiedlichen Förderverhältnissen im äußeren Bereich der Mähmaschine, da hier die äußeren Einzugs- und Mähtrommeln 1 und 5 gegenläufig zu der jeweils nach innen angrenzenden Einzugs- und Mähtrommel 2 bzw. 6 umlaufen, um im gegenseitigen Zusammenwirken das geschnittene Erntegut durch den zwischen ihnen gebildeten Spalt hindurchzufördern. Der Außenrand 38 der äußeren Einzugs- und Mähtrommeln 1,5 läßt den vorderen bzw. vorauslaufenden Teil der Einzugs- und Mähtrommel 1,5 zwar ebenfalls unbedeckt, schneidet jedoch den Zahnfußkreis der Mitnehmerzähne 28 bereits kurz vor der Querebene 50 der Maschine, die orthogonal zur Längsmittelebene 9 ausgerichtet ist und in der die bei dem dargestellten Beispiel einen gleichen Durchmesser aufweisenden Einzugs- und Mähtrommeln 1 bis 8 mit fluchtender Anordnung ihrer Rotationsachsen 20 angeordnet sind.

## Patentansprüche

1. Maschine zum reihenunabhängigen Mähen und Häckseln von Mais und dgl. stengelartigem Erntegut, mit einer Reihe von um im wesentlichen vertikale Achsen rotierenden, mit abstehenden Mitnehmerzähnen versehenen Einzugs- und Mähtrommeln in Querausrichtung vor einem mittleren Häcksler für das geschnittene Erntegut, den den Einzugs-und Mähtrommeln zugehörigen, oberseitig im Bereich ihres, bezogen auf den Häcksler, rückläufigen Rotationssektors übergreifenden maschinenfesten Abdeckplatten und mit je einer in Fahrtrichtung vorauslaufenden Teilerspitze für das zu mähende Erntegut im Bereich vor dem Zwickel zwischen jeweils zwei benachbarten Einzugs- und Mähtrommeln, **dadurch gekennzeichnet, daß** der Außenrand (38) der Abdeckplatten (33,34,35) im an die jeweilige Teilerspitze (16) angrenzenden Bereich eine Einwölbung (39) entgegen der Fahrtrichtung (F) aufweist, die die Mitnehmerzähne (28) der zugehörigen Einzugs- und Mähtrommel (2,3,4;6,7,8) freilegt und eine in Abhängigkeit von der Beschaffenheit des Erntegutes mittels eines Sperrgliedes (40) wahlweise schließbare Öffnung für ein Eintreten des Erntegutes zwischen die Mitnehmerzähne (28) bildet.

2. Maschine nach Anspruch 1, **dadurch gekennzeichnet, daß** das Sperrglied (40) in einer die Einwölbung (39) übergreifenden Position mit der Abdeckplatte (33,34,35) verbindbar ist.

3. Maschine nach Anspruch 2, **dadurch gekennzeichnet, daß** das Sperrglied (40) von einem auf die Abdeckplatte (33,34,35) aufsetzbaren Ablenkkörper (40) für kopflastiges Erntegut gebildet ist.

4. Maschine nach Anspruch 3, **dadurch gekennzeichnet, daß** der Ablenkkörper (40) eine stabförmige Grundgestalt besitzt und mit seiner Längsachse in Querausrichtung (Q) zur Fahrtrichtung (F) auf der Oberseite der Abdeckplatte (33,34,35) in deren vorderem Randbereich befestigbar ist.

5. Maschine nach Anspruch 3 oder 4, **dadurch gekennzeichnet, daß** der Ablenkkörper (40) keilförmig mit in Fahrtrichtung (F) geneigtem Keilrücken (42) ausgebildet ist.

6. Maschine nach Anspruch 4 oder 5, **dadurch gekennzeichnet, daß** der Ablenkkörper (40) einen ersten, die Einwölbung (39) überdeckenden Keilbereich (42) mit in Fahrtrichtung (F) weisender Keilspitze und einen zweiten Keilbereich (43) an seinem von der Einwölbung (39) abgewandten Ende mit quer zur Fahrtrichtung (F) weisender Keilspitze umfaßt.

7. Maschine nach einem der Ansprüche 1 bis 6, **dadurch gekennzeichnet, daß** das Sperrglied (40) von einem mit der Abdeckplatte (33,34,35) verschraubbaren Profilkörper (44) gebildet ist.

8. Maschine nach einem der Ansprüche 1 bis 7, **dadurch gekennzeichnet, daß** die Teilerspitzen (16) ein Querschnittsprofil mit zu ihrem unteren Ende hin verjüngten unteren Seitenteilen (48) aufweisen.

## Claims

1. A machine for row-independent cutting and chopping of maize and such stalk-like crops with a row of drawing-in and cutting drums in the transverse direction in front of a central chopper for the cut crop, the drums rotating about substantially vertical axes and being provided with projecting entraining teeth, cover plates fixed to the machine engaging at the top over the corresponding cutting drums in the region of their retrograde sector of rotation relative to the chopper, and with a divider point for the crop to be cut extending forward in the direction of travel in the each region ahead of the gusset between two adjacent drawing-in and cutting drums, **characterized in that** the outer edge (38) of the cover plates (33, 34, 35) has a curving-in (39) against the direction of travel (F) in the region adjoining the respective divider point (16), which exposes the entraining teeth (28) of the associated drawing-in and cutting drum (2, 3, 4; 6, 7, 8) and forms an opening for entry of the crop between the entraining teeth (28) which can be selectively closed by means of a blocking member (40), depending on the nature of the crop.

2. A machine according to claim 1, **characterized in that** the blocking member (40) can be connected to the cover plate (33, 34, 35) in a position engaging over the curving-in (39).

3. A machine according to claim 2, **characterized in that** the blocking member (40) is formed by a deflecting body (40) which can be fitted on the cover plate (33, 34, 35) for crop with heavy heads.

4. A machine according to claim 3, **characterized in that** the deflecting body (40) has a basically bar-shaped form and can be fixed on the upper side of the cover plate (33, 34, 35) in its front edge region with the longitudinal axis of the body in the transverse direction (Q) to the direction of travel (F).

5. A machine according to claim 3 or 4, **characterized in that** the deflecting body (40) is of wedge form with its wedge top (42) inclined in the direction of travel (F).

6. A machine according to claim 4 or 5, **characterized in that** the deflecting body (40) has a first wedge region (42) covering the curving-in (39) with a wedge point facing in the direction of travel (F) and a second wedge region (43) on its end facing away from the curving-in (39) with a wedge point facing transverse to the direction of travel (F).

7. A machine according to any of claims 1 to 6, **characterized in that** the blocking member (40) is formed by a profiled body (44) which can be screwed to the cover plate (33, 34, 35).

8. A machine according to any of claims I to 7, **characterized in that** the divider points (16) have a cross-sectional profile with side parts (48) tapering to their lower ends.

## Revendications

1. Machine pour faucher et hacher du maïs et une matière récoltée similaire à tiges, indépendamment de rangées, comportant une série de tambours d'entrée et de fauchage, qui tournent autour d'axe essentiellement verticaux et qui sont équipés de dents saillantes d'entraînement, et qui s'étendent avec une orientation transversale en avant d'une hacheuse médiane, pour la matière récoltée et coupée, et comportant des plaques de recouvrement qui sont solidaires de la machine, sont associés aux tambours d'entrée et de fauchage et qui s'engagent sur le côté supérieur au-dessus des tambours d'entrée et de fauchage, dans la zone de leur secteur de rotation arrière, par rapport à la hacheuse, et comportant respectivement une pointe de séparation, qui s'étend avant dans la direction de déplacement, pour la matière de récolte à faucher, dans la zone située en avant de l'interstice présent entre respectivement deux tambours d'entrée et de fauchage voisins, **caractérisée en ce que** le bord extérieur (38) des plaques de recouvrement (33, 34, 35) possède, dans la partie jouxtant la pointe de séparation respective (16), une moulure concave (39) dans la direction de déplacement (F), qui dégage les dents d'entraînement (22) des tambours d'entrée et de fauchage associés (2, 3, 4; 6, 7, 8) et forme une ouverture, pouvant être fermée au choix à l'aide d'un organe de blocage (40) en fonction de l'état de la matière à récolter, pour l'entrée de la manière à récolter entre les dents d'entraînement (28).

2. Machine selon la revendication 1, **caractérisée en ce que** l'organe de blocage (40) peut être relié, dans une position, qui se situe au-dessus de la moulure concave (39), à la plaque de recouvrement (33, 34, 35).

3. Machine selon la revendication , **caractérisée en ce que** l'organe de blocage (40) est formé par un corps de déviation (40) qui peut être monté sur la plaque de recouvrement (33, 34, 35) et est prévue pour dévier la matière à récolter qui a tendance à s'abaisser.

4. Machine selon la revendication 3, **caractérisée en ce que** le corps de déviation (40) possède une configuration de base en forme de barreau et peut être fixé par son axe longitudinal, avec l'orientation transversale (Q) par rapport à la direction de déplacement (F) sur le côté supérieur de la plaque de recouvrement (33, 34, 35), dans la zone du bord avant de cette plaque.

5. Machine selon la revendication 3 ou 4, **caractérisée en ce que** le corps de déviation (40) est agencé en forme de coin, le dos (42) du coin étant incliné dans la direction de déplacement (F).

6. Machine selon la revendication 4 ou 5, **caractérisée en ce que** le corps de déviation (40) comporte une première partie de coin (42) qui recouvre la moulure concave (39) et comporte une pointe qui est dirigée dans la direction de déplacement, et une seconde partie de coin (43) sur son extrémité tournée à l'opposé de la partie concave (34) et possédant une pointe dirigée transversalement par rapport à la direction de déplacement (F).

7. Machine selon l'une des revendications 1 à 6, **caractérisée en ce que** l'organe de blocage (40) est formé par un corps profilé (44), qui est vissable avec la plaque de recouvrement (33, 34, 35).

8. Machine selon l'une des revendications 1 à 7, **caractérisée en ce que** les pointes de séparation (16) possèdent un profil en coupe transversale comportant des parties latérales inférieures (48) qui se rétrécissent en direction de leur extrémité inférieure.
